Europäisches Patentamt

European Patent Office

Office européen des brevets

(19)

(11) Numéro de publication : **0 410 871 B1**

(12) **FASCICULE DE BREVET EUROPEEN**

(45) Date de publication du fascicule du brevet :
**19.08.92 Bulletin 92/34**

(51) Int. Cl.$^5$ : **F02D 9/10, F16K 1/226**

(21) Numéro de dépôt : **90402127.6**

(22) Date de dépôt : **24.07.90**

(54) **Dispositif d'étranglement à organe rotatif pour installation d'alimentation de moteur à combustion interne.**

(30) Priorité : **26.07.89 FR 8910078**

(43) Date de publication de la demande :
**30.01.91 Bulletin 91/05**

(45) Mention de la délivrance du brevet :
**19.08.92 Bulletin 92/34**

(84) Etats contractants désignés :
**DE ES IT**

(56) Documents cités :
**DE-C- 1 179 049**
**FR-A- 2 269 008**
**FR-A- 2 421 315**
**FR-A- 2 438 219**
**JP-U- 6 446 443**

(56) Documents cités :
**US-A- 2 331 161**
**US-A- 4 660 996**
**US-A- 4 759 326**
**US-A- 4 860 706**
**PATENT ABSTRACTS OF JAPAN vol. 9, no.
229 (M-413)(1952) 14 septembre 1985, & JP-
A-60 85229 (TOYOTA) 14 mai 1985,**

(73) Titulaire : **SOLEX**
**19, rue Lavoisier**
**F-92002 Nanterre Cédex (FR)**

(72) Inventeur : **Semence, Pierre**
**40 Boulevard de la République**
**F-78400 Chatou (FR)**

(74) Mandataire : **Fort, Jacques**
**CABINET PLASSERAUD 84, rue d'Amsterdam**
**F-75009 Paris (FR)**

EP 0 410 871 B1

## Description

L'invention concerne les installations d'alimentation pour moteurs à combustion interne et, plus particulièrement, un dispositif d'étanglement destiné à être incorporé dans de telles installations, du type défini dans le préambule de la revendication. Un tel dispositif est montré dans le document JP-U-64 464 43.

De tels dispositifs sont incorporés dans les carburateurs, pour commander le débit de mélange air/combustible, et dans les installations d'injection monopoint ou multipoints, où le dispositif constitue un "corps de papillon", pour commander le débit d'air dans le conduit d'admission.

La plupart des dispositifs utilisés à l'heure actuelle comprennent une butée réglable, souvent constituée par une vis dont la position est ajustable sur le corps, destinée à venir en contact avec un levier solidaire de l'organe d'étanglement lorsque ce dernier arrive dans une position d'ouverture minimale où il laisse subsister une section de passage d'air suffisante pour permettre le fonctionnement du moteur au ralenti.

Cette disposition a l'avantage d'être simple. Mais elle a des inconvénients. Les gaz de carter ramenés dans l'entrée d'air, en amont de l'organe d'étranglement, produisent des dépôts de matières solides qui colmatent progressivement la section libre, diminuent le débit d'air et réduisent le régime de ralenti du moteur. Lorsque le moteur fonctionnant au ralenti est soumis à une charge variable (par exemple augmentant brusquement lors de l'enclenchement d'une boîte de vitesse automatique ou d'un climatiseur), la vitesse de ralenti du moteur doit être régulée par des moyens capables de modifier la section de passage d'air ou de mélange air/combustible. Des moyens de commande agissant sur l'organe d'étranglement sont coûteux, car il nécessitent en général un moteur pas à pas et un réducteur de vitesse.

On a égalaient proposé des dispositifs d'étranglement comprenant un canal d'air en dérivation autour de l'emplacement de l'organe d'étranglement, par lequel passe la totalité ou la plus grande partie de l'air nécessaire au fonctionnement du moteur au ralenti. Dans ce cas il est possible d'adopter une position d'ouverture minimale pour laquelle l'organe d'étranglement obture complètement le conduit d'admission.

Mais il est difficile d'éviter des fuites entre l'amont et l'aval de l'organe &'étranglement des dispositifs connus lorsque ce dernier est fermé. Une première cause de fuite est l'application imparfaite de la tranche du papillon contre la paroi du conduit d'admission. Elle peut être réduite par un usinage précis, qui a l'inconvénient d'augmenter le prix de revient. Des fuites se produisent également le long des paliers, surtout lorsqu'on constitue ces derniers par des roulements pour faciliter la rotation du papillon. Enfin, des fuites peuvent se produire entre l'axe et le papillon, surtout lorsque ce dernier est constitué par un disque mince traversant une fente de l'axe.

La présence de ces fuites gêne le réglage du ralenti. Elle trouble le fonctionnement des dispositifs à réglage électronique du débit de combustible qui utilisent, comme paramètre d'entrée représentatifs du débit d'air, la position angulaire de l'organe d'étranglement.

On connaît également une vanne papillon (FR-A-2 269 008) comportant des moyens de réduction des fuites le long de moyeux emboîtés dans le papillon. Ces moyeux ne comportent pas de joints annulaires engagés chacun dans une portée du corps mais un anneau d'appui dont la partie interne recouvre la face interne de la totalité de l'enveloppe. L'étanchéité au niveau des moyeux est assurée par des joints toriques.

L'invention vise à fournir un dispositif de commande du genre défini plus haut, dans lequel les débits de fuite sont considérablement réduits.

Dans ce but, l'invention propose un dispositif tel que défini par la partie caractérisante de la revendication 1.

Chaque joint est généralement constitué en matériau élastique, tel que le polytétrafluoréthylène ou un élastomère naturel ou synthétique. Le joint a avantageusement une section en U dont les branches sont dirigées vers l'extérieur et comportent les surfaces de contact avec l'axe et la portée correspondante, et dont le fond épais coopère avec l'organe d'étranglement rotatif. La dépression qui règne à l'intérieur du corps lors du fonctionnement du moteur tend à appliquer les branches contre les surfaces d'appui et donc à améliorer l'étanchéité.

La présence des joints non seulement réduit les fuites du dispositif neuf mais encore réduit les fuites qui tendent à apparaître lors de l'usure normale.

L'invention sera mieux comprise à la lecture de la description qui suit d'un mode particulier de réalisation, donné à titre d'exemple non limitatif. La description se réfère aux dessins qui l'accompagnent, dans lesquels :

– la Figure 1 montre les éléments concernés par l'invention d'un dispositif d'étranglement qui peut être un corps de papillon, représenté en coupe partielle suivant un plan passant par l'axe du conduit d'admission et l'axe de rotation de l'organe d'étranglement ;

– la Figure 2 est une vue de dessus du dispositif de la Figure 1 ;

– la Figure 3 est une vue en élévation d'un des joints du dispositif des Figures 1 et 2 ;

– la Figure 4 est une vue en coupe suivant la ligne IV-IV de la Figure 3.

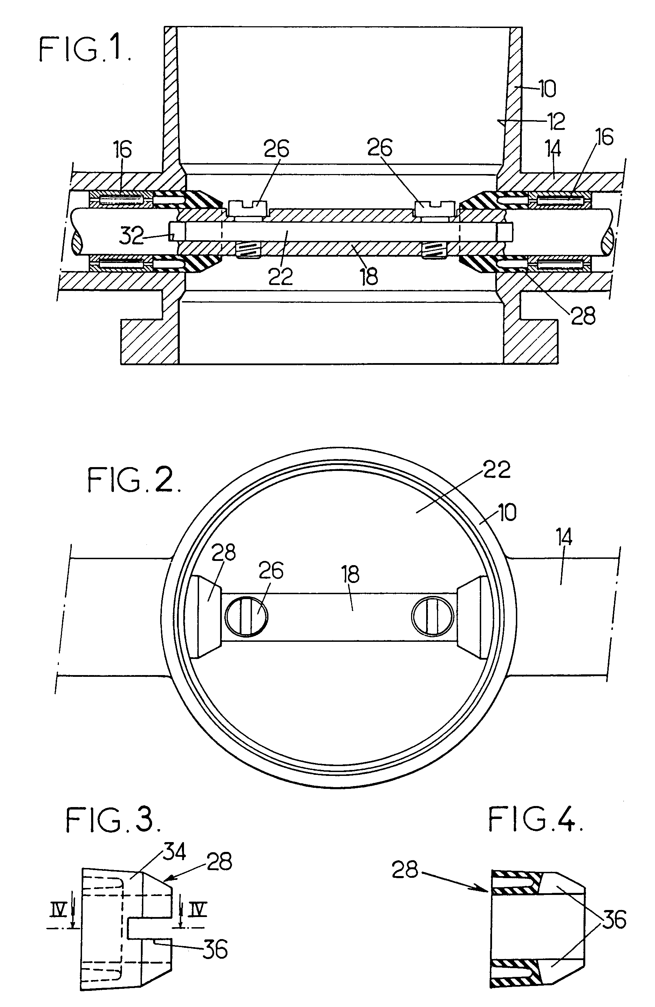

Le dispositif d'étranglement montré en Figures 1 et 2 comprend un corps 10 constitué par une pièce de fonderie, dans lequel est ménagé un conduit d'admission 12. Dans le corps 10 sont ménagées deux portées 14 où sont emmanchées les bagues externes de roulements à aiguilles ou à billes 16 dans lesquelles tourne un axe 18. Cet axe est commandé par une tringlerie, non représentée, de constitution classique, et un ressort de rappel tend à faire tourner l'axe dans le sens de la fermeture.

Sur l'axe 18 est monté un organe d'étranglement rotatif constitué par un papillon 22. Dans le mode de réalisation représenté, ce papillon est constitué par un disque mince qui traverse l'axe 18 à travers une fente diamétrale 32 de ce dernier. Ce disque mince est solidarisé de l'axe 18 par des moyens classiques démontables, constitués, dans le cas illustré sur les Figures 1 et 2, par deux vis 26 qui s'engagent dans des trous taraudés traversant l'axe 18.

Pour faciliter la mise en place du papillon 22, on donne généralement à la fente 32 une longueur plus importante que le diamètre du papillon, ce qui se traduit par la présence de brèches qui sont source de fuites. Le dispositif d'étranglement comprend des moyens d'étanchéité obturant ces brèches. Ils sont constitués de deux joints annulaires 28 identiques, interposés chacun entre l'un des roulements 16 et une tranche enveloppant une fraction de la tranche du papillon 22. Chaque joint a une section droite en forme de U. Une des branches de l'U s'appuie sur une portée correspondante 14 et l'autre contre l'axe.

Le fond 34 des joints présente une longueur axiale suffisamment importante pour déborder sur l'axe 18 au-delà des brèches, comme le montre la Figure 1. Dans ce fond est ménagée une encoche 36 d'épaisseur correspondant à celle du papillon 22, permettant à chaque joint de s'emboîter sur la partie terminale du papillon. On obtient ainsi une obturation complète au niveau des portées d'axes. Dans ce mode de réalisation, les joints 28 ont une longueur axiale en général du même ordre de grandeur que la longueur axiale des roulements 16.

On voit qu'un tel joint évite les fuites vers l'aval du papillon aussi bien par l'intermédiaire des paliers 16 que par des jeux entre la tranche du papillon et la paroi du conduit d'admission.

L'invention ne se limite pas au mode particulier de réalisation qui a été représenté à titre d'exemple. Elle s'étend en particulier aux montages de papillons différents, par exemple dont l'axe est porté par des paliers lisses.

## Revendications

1. Dispositif d'étranglement à organe rotatif pour installation d'alimentation de moteur à combustion interne, comprenant un corps (10) dans lequel est ménagé un conduit d'admission qui contient un papillon d'étranglement (22) en forme de disque, traversant une fente ménagée dans un axe qui traverse le corps et tourne dans des paliers (16) portés par le corps, destiné à être commandé par le conducteur et mobile entre une position d'ouverture minimale du papillon, vers laquelle il est sollicité par un ressort de rappel, et une position d'ouverture maximale, correspondant à la pleine charge du moteur, et séparé de chacun des paliers par un joint annulaire (28) en matériau souple engagé dans une portée du corps, présentant une surface cylindrique externe en contact avec le corps et une surface cylindrique interne en contact avec l'axe (18), caractérisé en ce que chaque joint d'étanchéité (28) fait saillie dans le conduit d'admission (12) et s'emboîte de façon étanche sur une partie latérale respective du papillon.

2. Dispositif selon la revendication 1, caractérisé en ce que chaque joint (28) a une section en U dont les branches sont dirigées vers l'extérieur et comportent les surfaces de contact avec l'axe et la portée correspondante, et dont le fond épais coopère avec le papillon rotatif.

3. Dispositif selon la revendication 1 ou 2, caractérisé en ce que chaque joint est en polytétrafluoréthylène ou en élastomère naturel ou synthétique.

4. Dispositif selon la revendication 1, 2 ou 3, caractérisé en ce que chaque joint a un fond épais dans lequel est pratiquée une encoche (36) destinée à permettre aux joints (28) de s'emboîter sur la partie latérale du papillon.

5. Dispositif selon l'une quelconque des revendications 1 à 4, caractérisé en ce que le joint (28) a une longueur du même ordre de grandeur que celle des paliers (16).

## Patentansprüche

1. Drosselvorrichtung mit einem drehbaren Organ für die Kraftstoffversorgungsanlage einer Brennkraftmaschine, umfassend einen Körper (10), in dem eine Ansaugleitung vorgesehen ist, die eine Drosselklappe (22) in Form einer Scheibe enthält, die quer in einem in einer Achse angeordneten Spalt verläuft, wobei sich die Achse quer im Körper erstreckt und sich in durch den Körper gehaltene Lagern (16) dreht, um durch den Fahrer eingestellt zu werden und um beweglich zwischen einer Stellung mit minimaler Öffnung der Klappe, zu der sie durch eine Rückstellfeder beaufschlagt wird, und einer Stellung mit maximaler Öffnung entsprechend der Vollast des Motors zu sein, und getrennt von jedem der Lager durch ein ringförmiges Verbindungselement (28) aus einem nachgiebigen Material zu sein, das in eine Öffnung des Körpers eingreift und eine zylindrische Außenoberfläche in Berührung mit dem Körper und eine zylindrische Innenoberfläche in Berührung mit der Achse (18) aufweist, **dadurch gekennzeichnet,** daß jedes Verbindungselement als Abdichtung (28) mit einem Vorsprung in die Ansaugleitung (12) ausgebildet ist und sich in einer Art und Weise dicht auf einen seitlichenen teil der Klappe aufsetzt.

2. Vorrichtung nach Anspruch 1,
dadurch gekennzeichnet,
daß jedes Verbindungselement (28) einen U-Abschnitt hat, dessen Schenkel nach außen gerichtet sind und Berührungsoberflächen mit der Achse und der Öffnung jeweils umfassen, und der dicke Boden des U mit der drehbaren Klappe zusammenwirkt.

3. Vorrichtung nach den Ansprüchen 1 oder 2,
dadurch gekennzeichnet,
daß jedes Verbindungselement aus Polytetrafluorethylen oder einem anderen natürlichen oder synthetischen Elastomer ausgebildet ist.

4. Vorrichtung nach dem Anspruch 1, 2 oder 3,
dadurch gekennzeichnet,
daß jedes Verbindungselement einen dicken Boden hat, in dem eine Aussparung (36) ausgespart ist, zum Aufsetzen bzw. Umgreifen der Verbindungselemente (28) auf einen lateralen Abschnitt der Klappe.

5. Vorrichtung nach einem der Ansprüche 1 bis 4,
dadurch gekennzeichent,
daß das Verbindungselement (28) eine Länge derselben Größenordnung wie die der Lager (16) aufweist.

**Claims**

1. Throttling device having a rotatable element for internal combustion engine supply system, comprising a body (10) in which there is formed an induction passage which accomodates a disk-shaped throttling butterfly valve (22) which passes through a slot formed in a shaft which passes through the body and rotates in bearings (16) carried by the body, said butterfly valve being for control by the driver and being movable between a butterfly valve minimum opening position, toward which it is biased by a return spring, and a maximum opening position, corresponding to full load of the engine, and being separated from each bearing by an annular joint (28) of flexible material, engaged in a bore of the body, having an external cylindrical surface which is in contact with the body and an internal cylindrical surface in contact with the shaft (18),
characterized in that each sealing joint (28) projects into the induction passage (20) and sealingly fits over a respective lateral part of the butterfly valve.

2. Device according to claim 1,
characterized in that each joint (28) has a U shaped cross-section whose branches are directed outwardly and comprise the surfaces contacting the shaft and the respective bore and whose thick bottom cooperates with the rotatable butterfly valve.

3. Device according to claim 1 or 2,
characterized in that each joint is of polytetrafluorethylene or of natural or synthetic elastomer material.

4. Device according to claim 1, 2 or 3,
characterized in that each joint has a thick bottom wherein a slot (36) is formed for enabling the joints (28) to fit over the lateral part of the butterfly valve.

5. Device according to any one of claims 1-4,
characterized in that the joint (28) has a length of the same order of magnitude as that of the bearings (16).

EP 0 410 871 B1

FIG.1.

FIG.2.

FIG.3.

FIG.4.

5